Europäisches Patentamt

(19) European Patent Office  (11) Publication number: **0 230 704**
Office européen des brevets  **B1**

(12) **EUROPEAN PATENT SPECIFICATION**

(45) Date of publication of the patent specification:  (51) Int. Cl.⁵: **H04N 13/02**
**27.12.90**

(21) Application number: **86300464.4**

(22) Date of filing: **23.01.86**

(54) Three dimensional television system.

(43) Date of publication of application:
**05.08.87 Bulletin 87/32**

(45) Publication of the grant of the patent:
**27.12.90 Bulletin 90/52**

(84) Designated Contracting States:
**DE FR GB IT NL**

(56) References cited:
**WO-A-84/01875**
**US-A- 4 006 291**
**US-A- 4 567 513**

(73) Proprietor: **Imsand, Donald J., 308 Jonquil Avenue, Fort Walton Beach Florida 32548(US)**

(72) Inventor: **Imsand, Donald J., 308 Jonquil Avenue, Fort Walton Beach Florida 32548(US)**

(74) Representative: **Sheader, Brian N. et al, Eric Potter & Clarkson St. Mary's Court St. Mary's Gate, Nottingham NG1 1LE(GB)**

ACTORUM AG

## Description

This invention relates to methods and apparatus for producing television images perceived by viewers to be stereoscopic.

Conventional stereoscopic television systems typically require special viewing aids, such as polarized glasses or ones having colored lenses, or special receiving equipment. Typical of the latter approach is the method for producing a three dimensional television image by alternating pictures from stereoscopic television cameras described by Carrillo in U.S. Patent US-A-3,457,364. The method of Carrillo requires a special picture tube for color. In addition, my tests indicate that the alternation method described by Carrillo (approximately 60 alternations per second, 30 of each picture, sychronized to the television field rate) may produce less depth illusion than methods using lower alternation rates.

There is known a method (the Imsand method) to produce the desired three dimensional effect while maintaining compatibility with existing broadcast standards and existing home TV receivers. However, when the two stereoscopic cameras are converged on foreground objects, in accordance with that method, background objects sometimes appear to flicker and jump. Similarly, when the cameras are pointed at background objects, foreground objects may appear to flicker and jump. The main contributor to this flicker and jump effect is the limit of binocular fusion of the visual perception process in combination with the flicker effect of the low alternation rate. The limit of binocular fusion phenomenon was first investigated by Panum in 1856 and is known to visual perception scientists as the limiting case of the Panum Phenomenon as disclosed in Rosenblith, Walter A. (editor), Sensory Communication, John Wiley & Sons, 1961, which discusses, in chapter 32, the physiological basis for the perception of binocularly fused images as a result of the alternation of stereo images and which is incorporated herein by reference in its entirety.

Efforts to reduce the detrimental effects of this limit of binocular fusion while still maintaining a three dimensional effect produced my invention described in U.S. Patent US-A 4 006 291. But the method of this invention did not completely correct the problem since it is designed to minimize the effects but does not correct or remove the cause.

The method of Carrillo does not have a flicker problem since the alternation rate is far above the critical flicker frequency described in visual perception literature. However, the limit of binocular fusion problem manifests itself as a double image.

WO-A 8 401 875 discloses a three-dimensional video apparatus and method for displaying a stereo pair of images as a single flicker-free three-dimensional image which is pleasing to the eye and which can be displayed on a standard unmodified home television receiver. The method comprises alternately producing images of a subject from two different points of origin at a rate within a range of 4 to 30 changes between points of origin per second. In one embodiment the images comprise first and second series of picture frames each of which comprises first and second interlaced fields, one of said fields representing first images of the subject viewed from one of the points of origin and the other of said fields representing second images of the subject viewed from the other of the points of origin. In another embodiment the picture frames of the first embodiment are mixed with picture frames comprising the first images to produce output picture frames having as a substantial and continuously present component the first images. In yet another embodiment the alternately produced images are mixed with images of the subject from one of said points of origin to produce output picture images having as a substantial and continuously present component the subject as viewed from the one point of origin.

## BASIC THREE DIMENSIONAL ILLUSION METHODOLOGY

Human visual perception of there dimension requires, in part, stereo images, one image corresponding to each eye, viewed from slightly different angles corresponding to the separation of the eyes. This causes each eye to see a slightly different image. Consequently, most three dimensional movie and television systems require the viewer to use some apparatus such as polarized glasses, color filter glasses or a mechanical shutter viewer in order to cause the left camera image to be viewed by the left eye and the right camera image to be viewed by the right eye.

However, a less obvious method is to simply alternately expose the two stereo images to both eyes of the viewer. The three dimensional illusion is produced by presenting stereoptican pairs of images to both the viewer's eyes, one image partner at a time, first one then the other, alternated several times per second. The normal visual perception process, through its significant adaptive and integrating capabilities and the physiology of the visual perception process, will interpret the images as a single three dimensional image, so long as the images are alternated such that binocular fusion can take place.

The visual perception system does not care which eye sees which image. As long as there is a disparity in the two images and as long as the two images are within some range of corresponding binocular positions, a correct depth relationship will be perceived. The visual cortex apparently measures the disparities in the two images to determine the depth of an object. A depth illusion system must provide some means to present the images such that the visual cortex can perform this measurement.

The first paragraph of this section contains a simplification that should now be clarified since this clarification is pertinent to the present invention. The implication that 3D movies or television require the stereo cameras to be horizontally separated corresponding to the horizontal separation of the eyes is not completely accurate. My experiments indicate the two cameras can be vertically (or diagonally) separated and still achieve the depth illusion. This result is implied by tilting one's head to the side while viewing a 3D movie; the stereoptican depth illusion is still present even with the head tilted a full 90 degrees. This perception response to vertical disparity is also supported by visual perception literature such as "Stereopsis" by J. Mayhew in "Physical and Biological Processing of Images", edited by Braddick, O.J. and Sleigh, A.C., Springer-Verlag, 1983 and Pettigrew, John, The Neurophysiology of Binocular Vision, Scientific American, August, 1972, both of which are incorporated herein by reference.

In my method described in U.S. Patent Application Serial No. 308,209, filed November 20, 1972 and now abandoned, the stereo images are alternated at a rate near or below the critical flicker frequency. This is so that some of the retinal receptors can discharge to the visual cortex under the influence of one of the stereo images and other retinal receptors will discharge to the cortex under the influence of the other image in a time multiplexed fashion. Since the neuronal charges persist for some short time interval, the different charges from the disparate stereo images can interact in the binocular fusion process and depth is perceived.

The alternation rate of my method can vary, but generally should be of the order of 3 to 25 of each image per second. The relative exposure times to the two partner images can vary from equal exposure time of each to the subliminal exposure technique involving significantly unequal exposure time of my U.S. Patent Serial No, 4,006,291.

However, when the two cameras are pointed at a foreground object (that is, converged on the foreground object), background objects may appear to jump. Likewise, when the two cameras are pointed at a background object, foreground objects may appear to jump. The problem, which may appear to be caused only by the "flicker phenomenon", is actually caused by a combination of the flicker phenomenon and by the limit of binocular fusion first described by Panum. It should be emphasized here that converged binocular video does not flicker or jump. Unconverged binocular video does flicker and jump.

The differences in the characteristics of the Carrillo and the Imsand methods suggest of a very basic difference in the way the two methods function in the perception process. The Carrillo alternation rate is well above the critical flicker frequency; hence it has no flicker problem. This implies, however, that all retinal receptors discharge to the visual cortex under the influence of both stereo images. The Carrillo monochrome method also uses a spacial separation by placing the two stereo images on alternating interlaced lines, thus assuring that the two images are present on a space separation basis rather than a true time multiplex basis. The resolution, focus and electron beam sharpness of color picture tubes was not adequate at the time of Carrillo's invention to provide the necessary spacial separation for color applications. Thus, Carrillo found it necessary to use two contrasting colors, implemented with a special color picture tube, to keep the two disparate stereo pictures separated in the visual cortex so that binocular fusion could take place.

The methods and apparatus described herein to resolve the flicker problem of the Imsand method can also be used to resolve the double image problem of the Carrillo method.

In order to better explain the present invention a few elements of depth perception as related to the present invention will now be reviewed. The monocular cues to depth perception are not pertinent to the invention and are not included.

## BINOCULAR ELEMENTS OF DEPTH PERCEPTION

Two important cues to the visual perception of depth are binocular cues of convergence and stereoscopic vision.

## CONVERGENCE

When an object is at a great distance, lines of fixation to the object from a viewer's separate eyes are nearly parallel. When the object is near, the viewer's eyes are turned toward the object and the fixation lines converge at a more noticeable angle. If a person fixates his eyes on his finger at arm's length and then moves his finger in toward his nose while maintaining the fixation with his eyes, the eyes will "cross". This crossing or "pointing in" of the eyes is detectable by the sensory/control system that controls the position of the eyeballs and produces a sensation of more depth or less depth according to the size of the convergence angle of the eyes. However, visual perception scientists generally agree that convergence is a relatively minor cue to depth perception. Probably a more important result of convergence is that it also serves to place the two right and left eye images of the object fixated upon at (very nearly) corresponding retinal points in the central retinal area of each eye.

When the eyes are fixated (converged) on a point, the theoretical locus of all points whose images fall in exact retinal correspondence can be shown by geometric analysis. When the eyes are fixated on a point at the same elevation as the eyes, the locus of points in the horizontal plane lie on the circumference of a circle passing through the two eyes on one side of the circle and the convergence point on the other side of the circle. When this circle is rotated about an axis passing through the two eyes, the resulting donut shaped solid surface defines this locus of points in three dimensional space. The resulting locus of points are obviously not at a constant distance from the eyes. However, since binocular fusion only takes place in a small area of the central retina, for practical purposes the locus of points of exact retinal correspondence may be considered to be at the same distance and in the vicinity of the point the eyes are fixated upon.

## STEREOSCOPIC VISION

When a person looks at an object, the retinal image in the right eye is different (disparate) from the retinal image in the left eye. This disparity is the result of the two eyes viewing the object from the two slightly different positions. Experiments have shown that the human visual perception system is highly sensitive to the disparity of the two retinal images. The visual perception system uses the amount of disparity as a measure of the depth of the object being viewed, with increasing disparity being perceived as the object being closer. No disparity is perceived on viewing a far background object. Studies of visual perception have shown that this stereoscopic vision phenomenon is a much more important cue to depth perception than convergence.

BINOCULAR FUSION

When an object is viewed by the two eyes, although the two retinal images may be different, only a single image is normally perceived. This phenomenal process which takes place in the visual cortex of the sensory system is known as binocular fusion.

LIMIT OF BINOCULAR FUSION

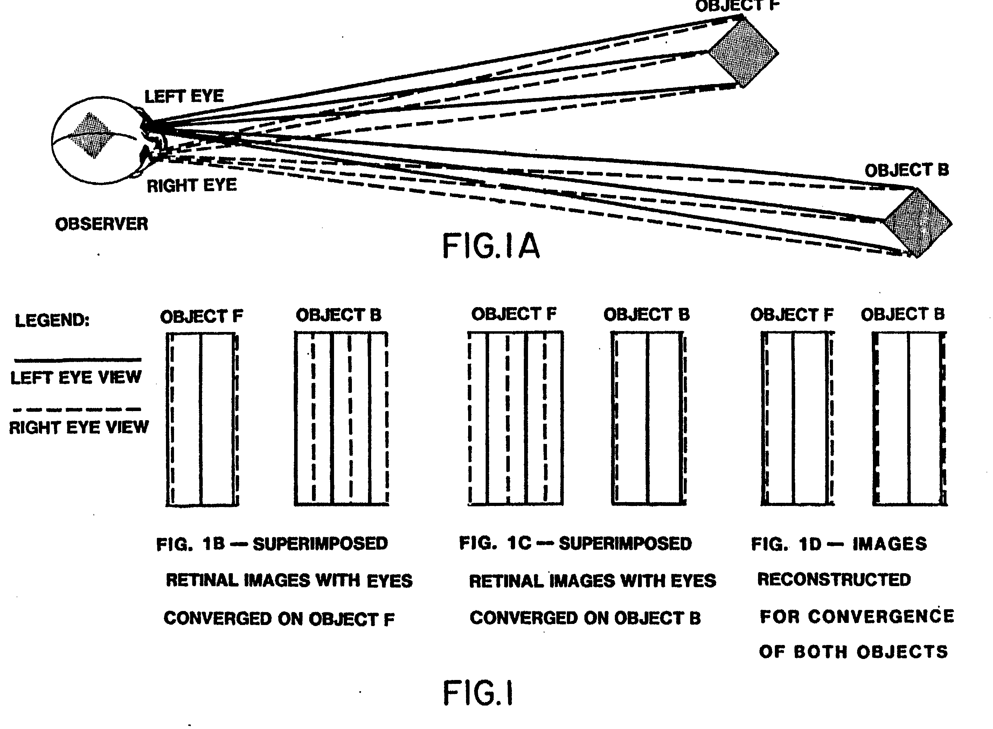

When the two eyes are conveged on an object several feet away, two slightly different images will be viewed by the two eyes but ony one binocularly fused image will be perceived. If a second object is immediately beside the first object, it also will be perceived as a binocularly fused image. If the eyes remain fixated (converged) on the first object and the second object is moved further away into the background, a simple geometric projection analysis (see FIGS 1A and 1B) will show that the difference in retinal correspondence in the retinal images of the background object will increase. When the difference gets large enough, the sensory system can no longer binocularly fuse the object and a double image will result. When this occurs, the limit of binocular fusion has been reached. This is discussed as "Panum's limiting case" in Chapter 5 of Murch, Gerald M., Visual and Auditory Perception, Bobbs-Merrill Company, 1973, which is incorporated herein, by reference, in its entirety.

When the eyes are shifted and fixated on the background object, the background object will again become binocularly fused and the foregound object will become the double image (see FIGS 1A and 1C).

ACCOMMODATION

The viewer is not normally aware of a double image even though it may be present in most complex scenes. This is because when the eyes are converged on the foreground object they are also focused on that object and the double image of the background object is out of focus and is autonomously de-emphasized via the accommodation property of the visual perception process. Some texts indicate that accommodation is (only) the focusing of the eyes' lenses. However, the de-emphasis that may take place in the visual cortex also causes the viewer to be unaware of the out of focus double image.

The interaction of convergence and binocular fusion in binocular depth perception is recognised in visual perception literature as a complex process (refer to Julez, Dela, Foundations of Cyclopean Perception, University of Chicago Press, 1971, which is incorporated herein by reference in its entirety). However, the following simplifications are consistent with visual perception literature and are pertinent to the present invention.

1. The visual perception system controls eye convergence in a manner that tends to maximize the correlation (or retinal correspondence) of the left and right eye images of the object of attention within some central portion of the retina.

2. The resulting two disparate images are processed by the visual cortex to determine (relative) depth by measuring the disparities and to resolve the disparities, merging the two images into a single perceived image.

Three dimensional reproduction systems are a paradox - movies, television or any system that tries to reproduce a three dimensional image on a flat screen. To recreate the same conditions more exactly would imply that the stereo cameras convergence by a priori synchronized with the viewer's eye convergence as he shifts his gaze from foreground to background. Indeed, existing 3D movies have double image problems in some complex scenes. The problem is not as obvious in 3D movies that use special glasses to separate the stereo images, but it is still there.

In the display or projection of moving video scenes, as with movies or television, the picture update rate (60 fields, 30 frames per second for television) is well above the critical flicker frequency, thereby providing the well known illusion of a continuously moving picture. However, the stereo partner alternation rate in accordance with my invention works better with a lower alternation rate, close to or lower than the critical flicker frequency. This may be because a lower rate permits neuronal binocular rivalry to take place in the visual cortex, resulting in the perception of depth. If such lower rate alternated stereo object images are adequately converged the picture alternation rate is not perceptable and no flicker results. However, if the partner object images exceed the limit of binocular fusion, the partner images jump and flicker at the partner alternation rate. If the partner alternation rate is increased, the flicker diminishes, but continuous double images result for object images outside the limit of binocular fusion and for object images within the limit of binocular fusion, the three dimensional illusion is reduced and a continuous fuzzy-edged object results.

With a three dimensional reproduction system, it would seem impossible to keep all corresponding elements of a complex scene within a viewer's limit of binocular fusion. As a person shifts his gaze from foreground to background objects in real three dimensional scenes, the convergence angle of his eyes changes thereby changing the relative position of the foreground and background object images on the retina as shown in FIGS 1B and 1C. However, in 3D reproduction systems the viewer's eyes are converged on the screen. The viewer's eye convergence angle could change as the viewer's gaze changes from foreground to background in the stereo reproduction scene. However, a careful geometric projection analysis will reveal that since the cameras are converged on the object of primary interest only (foreground for example), when the viewer's gaze shifts to the background object, proper retinal registration of the background object image would require an unnatural convergence angle for the eyes.

## SUMMARY OF THE INVENTION

This invention provides video processing systems that will process stereoscopic video signals such that all necessary objects in the stereo reproduced image are within a viewer's limit of binocular fusion, thus allowing binocular fusion without the jumping effect in foreground or background. This may be accomplished by either of two general methods. One method is to alternate stereo video only from objects that are within the limit of binocular fusion. For objects out of the binocular fusion region only video from one of the cameras would be passed, but that video would be passed all the time. The second method rearranges the video from all necessary objects such that the stereo images of each object in the scene, background and foreground, are arranged for binocular fusion (as illustrated in FIG 1D) to take place.

In accordance with this invention a stereoptican pair of images is presented, one partner at a time but alternating the two images, with each partner exposed to both eyes simultaneously. The alternation rate is of the order of 3 to 25 of each picture per second, but may be varied for optimal effects. The relative exposure time of each of the partners may be equal or may also be varied for optimal effects.

"Layered video techniques" generate converged binocular video combined with monocular video such that the limit of binocular fusion problem is eliminated.

Additional techniques are presented to detect corresponding elements in the two electronic video signals from two video cameras and to detect when corresponding elements of the two electronic video signals would cause the reproduced stereo elements to exceed the viewer's limit of binocular fusion.

These techniques are combined with methods and apparatus to combine parts of each pair of stereo images such that corresponding stereo elements within the viewer's limit of binocular fusion are alternated, but when the corresponding elements would be outside the limit of binocular fusion, only one of the stereo video signals for that element would be passed all the time with no alternation. Stereo elements that are alternated would appear to have depth while unalternated elements would appear as background (or foreground) elements.

Additional techniques are provided to rearrange video information in either one or both stereo electronic video signals such that all necessary video information from a scene, foreground and background, are within a proper binocular relationship such that when the two stereo partners are alternated at the appropriate partner alternation rate a single binocularly fused image will be perceived having the illusion of three dimensions. With these techniques, corresponding video elements that would otherwise be out of the limit of binocular fusion are repositioned such that they are within the limit of binocular fusion.

The above techniques may employ normal horizontal scan TV cameras and horizontal separation of the stereo cameras. Additional techniques will be presented involving vertical separation of the stereo cameras and vertically scanned TV cameras. These techniques may significantly reduce the video signal processing necessary to achieve globally converged stereoscopic video. (For the purpose of this discussion, "globally converged" means stereoscopic video, all corresponding elements of which are within the limit of binocular fusion throughout the reproduced image.)

A further object of this invention is the production of methods and devices for three dimensional image production which is adaptable to (standard and non-standard) television broadcasting, closed circuit television, and artificial image production as used in video games, motion picture cartoons, television cartoons, and similar applications. These video processing techniques are also adaptable to motion picture production.

## BRIEF DESCRIPTION OF THE DRAWINGS

FIGS 1A - 1D are drawings illustrating the geometry of binocular vision.

FIG 2 is a block diagram of a basic embodiment of a three dimensional television system in accordance with the present invention.

FIG 3 is a logic diagram illustrating amplitude correlation measurement.

FIG 4 is a logic diagram illustrating slope correlation measurement.

FIG 5 is a logic diagram illustrating a video edge detection system.

FIG 6 is a block diagram of a system to detect when video elements in two stereoscopic video signals correspond.

FIG 7 is a block diagram of a pulsed light ranging and convergence system.

FIG 8 is a block diagram of a system that alternates stereoscopic video elements only for objects that are within the limit of binocular fusion and produces monocular video for other objects.

FIG 9 is a signal diagram to illustrate the alternation of converged video elements.

FIG 10 is a block diagram of a system to process stereoscopic video to bring all corresponding video object elements within the limit of binocular fusion.

FIG 11 is a block diagram of a digital computer implementation of a stereoscopic video processing system to produce alternating stereoscopic video such that all corresponding video object elements are within the limit of binocular fusion.

FIG 12A and 12B is a block diagram of a stereoscopic video processing system for vertically separated stereoscopic TV cameras. The block diagram is also applicable for horizontally separated, vertically scanned TV cameras.

FIG 13 is a block diagram of a system in accordance with the present invention which utilizes layered video techniques in order to produce alternating signals in binocular relationship.

## DETAILED DESCRIPTION OF THE DRAWINGS

FIG 1A is a plan view diagram of a human observer and the lines of sight from each eye to a foreground object F and a background object B presented to assist in explaining the present invention.

FIG 1B is a simplified illustration of the superimposed retinal images for the observer of Fig 1A when his eyes are converged on the foreground object F.

FIG 1C is a simplified illustration of the superimposed retinal images for the observer of Fig1A when his eyes are converged on the background object B.

FIG 1D is a simplified illustration of the superimposed retinal images when the video has been processed in accordance with the present invention to simulate simultaneous convergence of the viewer's eyes on both object F and object B, thus allowing binocular fusion of both objects.

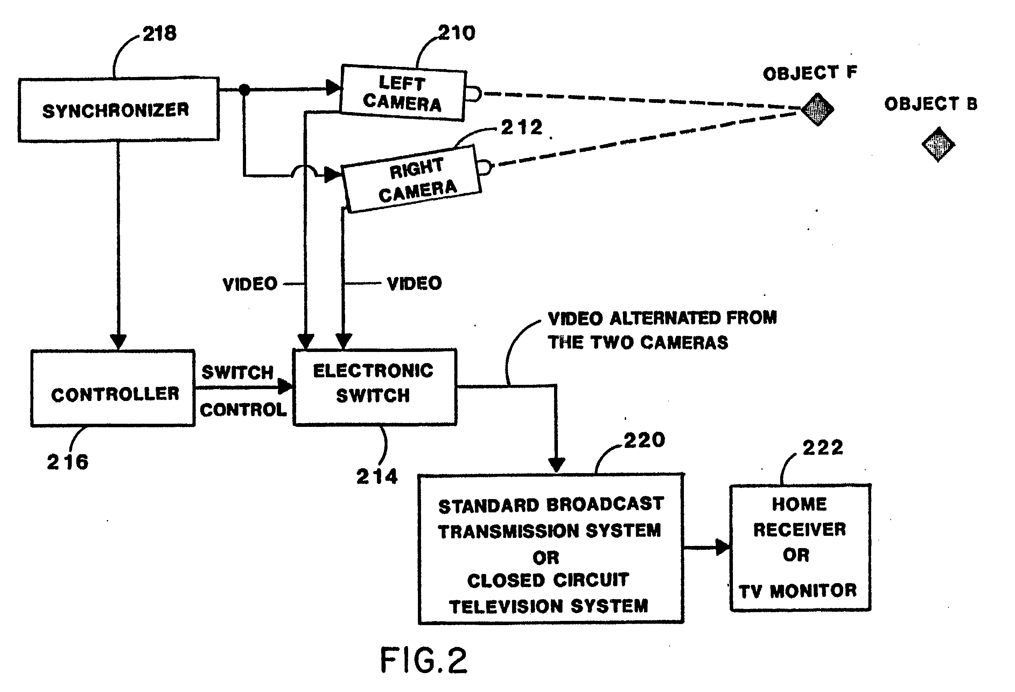

Referring to Fig 2, two television cameras, 210 and 212, with identical optics are correctly spaced and aimed for taking pictures which have a stereo relationship to each other. The cameras are shown converged on object F. A video switch 214 allows video from one camera and then the other camera to pass, under the command of a controller 216 for controlling the switch 214, and a video synchronization generator 218 synchronizes the controller 216 and the video of the two cameras. The transmission medium 220 sends video selected by switch 214 to monitor 222.

The embodiment of Fig 2 is not specifically designed to reduce or eliminate the limit of binocular fusion problem; however it could be used where all video elements are at a relatively equal distance from the cameras.

The two cameras 210 and 212 are aimed and focussed on the desired object, and the video signals from the two cameras are sychronized by the synchronization generator 218. The video from the two cameras is applied to the video switch 214. The controller 216 receives synchronization signals from the synchronization generator 218. The controller 216 controls the switch 214 to allow the video first from one camera to pass then from the other camera to pass. The video from the two cameras are alternated at a rate from about 3 to 25 of each picture per second and may be adjusted for optimal effect. Each channel may be exposed for equal amounts of time. However, relative exposure times may be varied for optimal effects and the techniques of U.S. Patent Number 4,006,291 applied to this invention.

Experiments indicate that the optimal alternation rate may be a function of the light intensity of the video scene. This result is supported by the writings of Robert Efron, Stereoscopic Vision, in the British Journal of Opthalmology, December, 1957. Therefore, the alternation rate can be somewhat optimized for changing video scenes by using a light meter to measure the light intensity of the video scene and operatively connecting the meter output to circuitry that controls the alternation rate of the stereo video signals. An alternate approach is to electronically measure the amplitude of the video signal, the amplitude being a function of light intensity.

## LAYERED VIDEO TECHNIQUES

Layered video techniques are generally applicable when parts of the video scene can be photographed separately and combined via "special effects" techniques often used in the video industry. For example, a singer against a color background can be photographed producing converged binocular video of the singer. The orchestra can be photographed separately with monocular video. Then using existing special effects circuitry, the solid color background can be detected and replaced with the monocular video. This method would produce an image of the singer with the depth effect of the converged binocular video and with the orchestra appearing in the background as monocular video but without any flicker or jumping in any portion of the entire resulting picture.

Many variations of this technique are feasible. For example, in the previous example the orchestra could be photographed with stereo cameras (but a different stereo set from that for the singer) and combined with the singer stereo image. Additional layers of video can also be combined. The several binocular videos can be combined in real time or video tape recordings can be used, but all must be properly synchronized and converged.

## CORRESPONDENCE DETECTION TECHNIQUES

Since a TV camera scans a scene horizontally as a function of time, the relative time of occurrence of corresponding stereo video elements within a horizontal scan can be used to determine if each corresponding stereo element pair is within the limit of binocular fusion. This correspondence detection can be used to implement alternation of converged stereo video elements while maintaining continuous video from one camera for unconverged video. (For the purpose of this discussion, a "video element" may be loosely defined as a video signal from the smallest discernible part of a single object in the video scene. "Corresponding video elements' are video elements in the two stereo video signals that originate from the same small part of the same object in the video scene.)

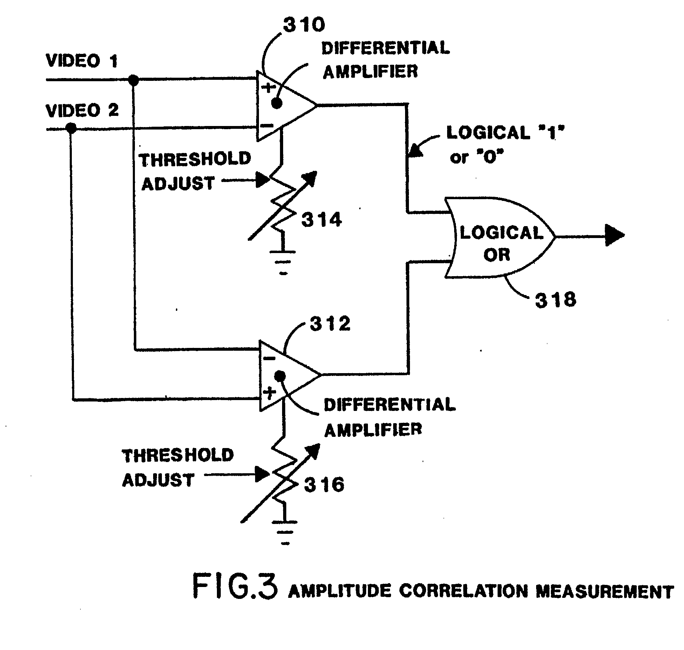

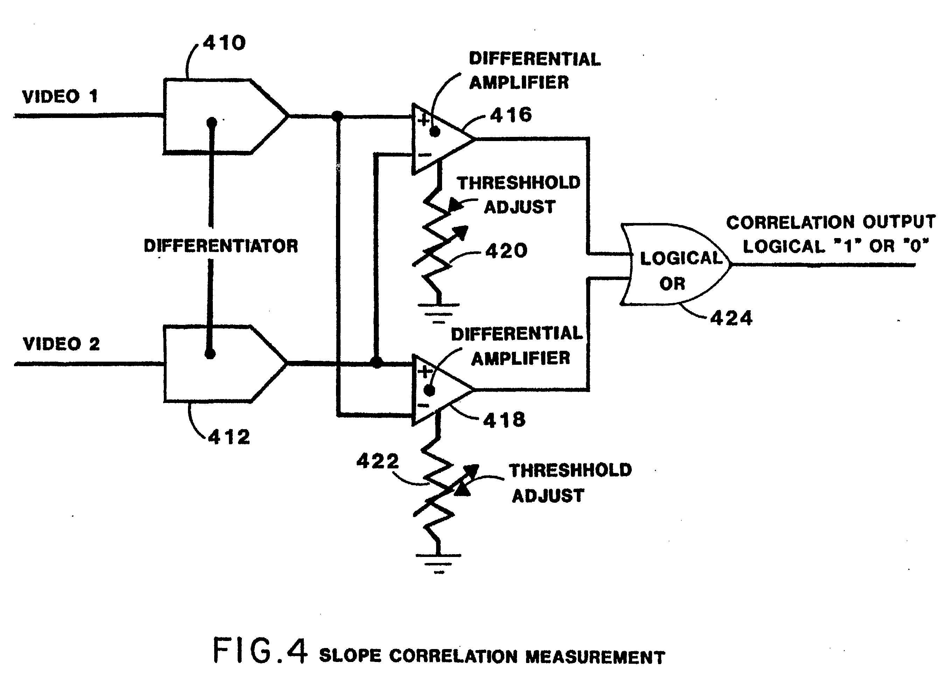

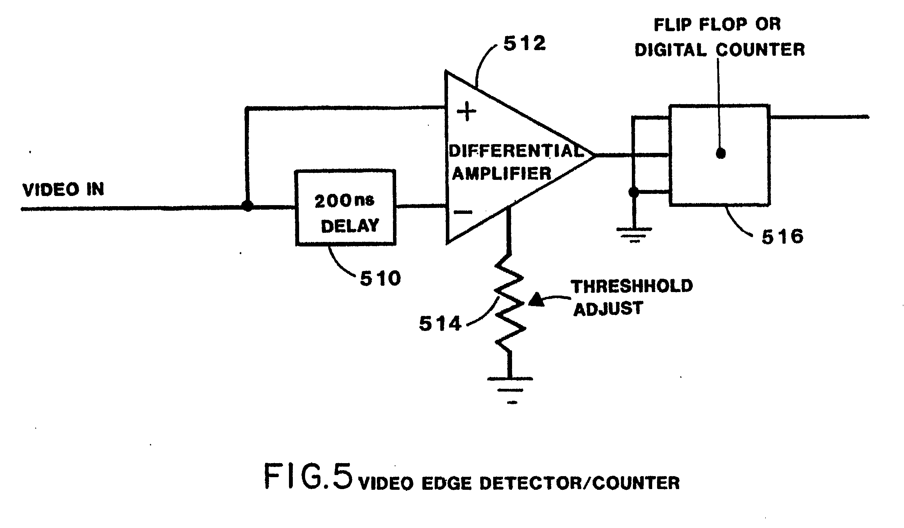

The first step in determining if the corresponding video elements are within the limit of binocular fusion is to identify the corresponding elements through correlation measurement techniques. Correlation measurement can be implemented in various ways. Correlation can be based on amplitude comparison between the two video signals (FIG 3), slope comparison between the two video signals (FIG 4), edge correspondence measurement between the two signals (FIG 5) or other time domain techniques. Frequency domain techniques can also be utilized: that is, by detection corresponding frequencies in the two signals. Combination of the above techniques is often necessary. Correlation measurement can be accomplished on monochrome signals, color signals, or combinations thereof. The correlation measurement can be accomplished through analog techniques or the video signals can be digitized and digital techniques utilized. A good combination technique for color signal correlation measurement is the combination of the light intensity signal and the color signal. The correlation measurement can be accomplished in the vertical direction, horizontal direction or in a combination vertical and horizontal direction. The two direction technique is more easily implemented utilizing the digital techniques and algorithms of picture processing via digital computer.

Logic circuitry designed to indicate that the elements correspond is utilized to detect when two video elements in the two stereo video signals are sufficiently correlated.

FIG 3 is a simplified illustration of an amplitude correlation measurement device that measures the amplitude difference between the two stereo video signals, video 1 and video 2. A video differential amplifier 310 amplifies the difference between the two video signals. Threshold (gain) adjustment 314 is used to adjust the gain of amplifier 310 so that when video 1 is an appropriate amount above video 2, the output of amplifier 310 will cause the output of the logical OR gate 318 to be in the "1" state indicating the signals are not adequately correlated. Amplifier 312 is identical to amplifier 310 but is connected with opposite polarity to the two video signals. Thus, when video 1 amplitude is a threshold above or below video 2, the OR gate output a "1" indicating non-correlation. If the two video signals are nearly equal, the OR gate outputs a "0" indicating correlation.

FIG 4 is a simplified illustration of a slope correlation measurement device that measures the difference in the slopes of the two video signals. Items 410 and 412 are video amplifiers connected as differentiators such that their outputs are proportional to the slopes of the video signal inputs. The differential amplifiers 416 and 418, threshold adjustments 420 and 422, and logical OR gate 424 function the same as in FIG 3. Thus, when the two signals slopes are nearly equal the logical OR gate 424 outputs a "0" indicating the slopes are adequately correlated. Otherwise a "1" output indicates the signals are not adequately correlated.

FIG 5 is a simplified illustration of a video edge detector. A video signal is connected to one terminal of a differential video amplifier 512 and through a video delay line device 510 (such as a video sample and hold circuit) to the other terminal. The amount of delay is illustrated as 200 nanoseconds but may be changed for optimal results. If the video signal changes by some threshold amount within the 200 nanoseconds, the amplifier 512 output will cause the digital counter or flipflop 516 to change state, indicating a video edge has occurred. A threshold adjustment 514 is included to adjust the amount of video signal change necessary to signify an edge, as the application requires.

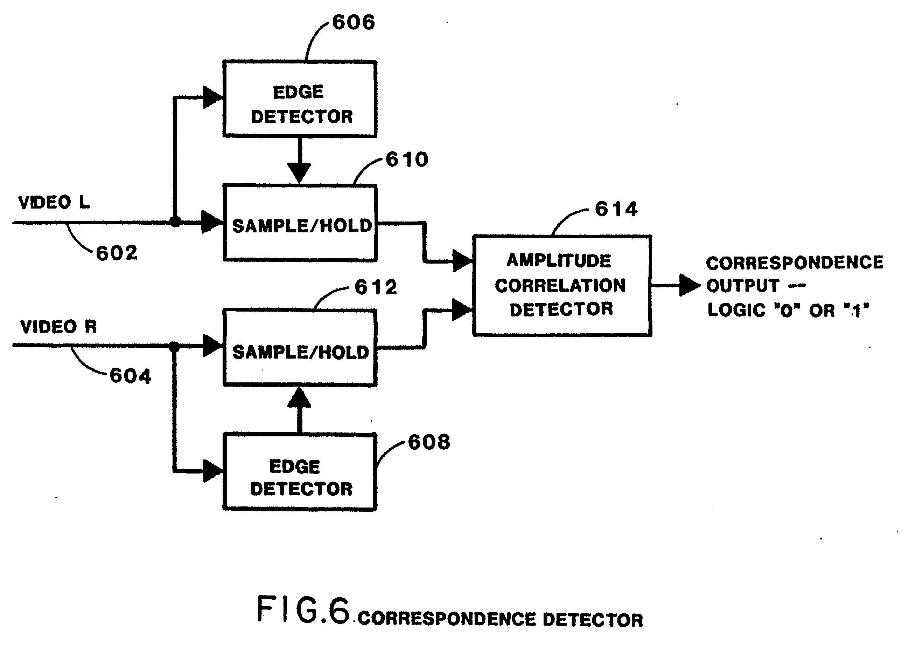

An implementation of a correspondence detector will now be described for a simple video scene. Referring to FIG 6, properly synchronized left and right stereo video inputs 602 and 604 are fed simultaneously to edge detectors 606 and 608 and sample and hold circuits 610 and 612. Each edge detector 606 and 608 detects when each video object begins and sends a signal to corresponding sample and hold circuit 610 and 612. Each sample and hold circuits 610 and 612 samples the signal immediately after the edge (for example, 200 nanosecond sample window) and holds its respective signal for input to the amplitude correlation detector 614. The amplitude correlation detector 614 compares the amplitudes of the two sampled signals and outputs a "1" when the signals are adequately correlated and a "0" when the signals are not adequately correlated. Adequately correlated signals may be said to "correspond".

It is apparent that an important part of correspondence measurement and detection is the sensing of detection of the edges of the various objects in the video scene. Special techniques can be used to identify the edges of the video objects to separate the various foreground, midground and background elements. For instance, foreground objects can be backlighted with ultraviolet or infrared light. One or both of the cameras can be outfitted with a prism video splitter and a special "vidicon" that is sensitive to the back light. The special vidicon can be scanned in the same manner as the regular video sensing element and the signal from the special vidicon will help identify the edges of the backlighted video objects.

"Range gating" can also be used to identify the video element edges as a function of range from the cameras. The amount of video shifting necessary to allow binocular fusion is a function of the range of the video object from the cameras. However, range is not usually measured or determined by a camera. Radar systems can measure range by transmitting short bursts of energy or pulses. Since the pulses travel at a specific velocity, range to an object can be calculated from the time it takes the pulse echoes to return from the object. Radar range to the object is measured by taking short sequential time samples (range gates) of the reflected energy to determine the time of arrival of the energy reflected from the object. This principle can also be used to implement edge detection of the various objects as a function of range to the objects, the video shifting necessary for binocular fusion being a function of the range to the video object.

This can be implemented in a video system by transmitting a pulse of light and by "looking" at the scene for short sequential periods of time. Each time sequential "look" contains video from objects at sequentially increasing ranges, and therefore can be used to implement the range dependent video shift.

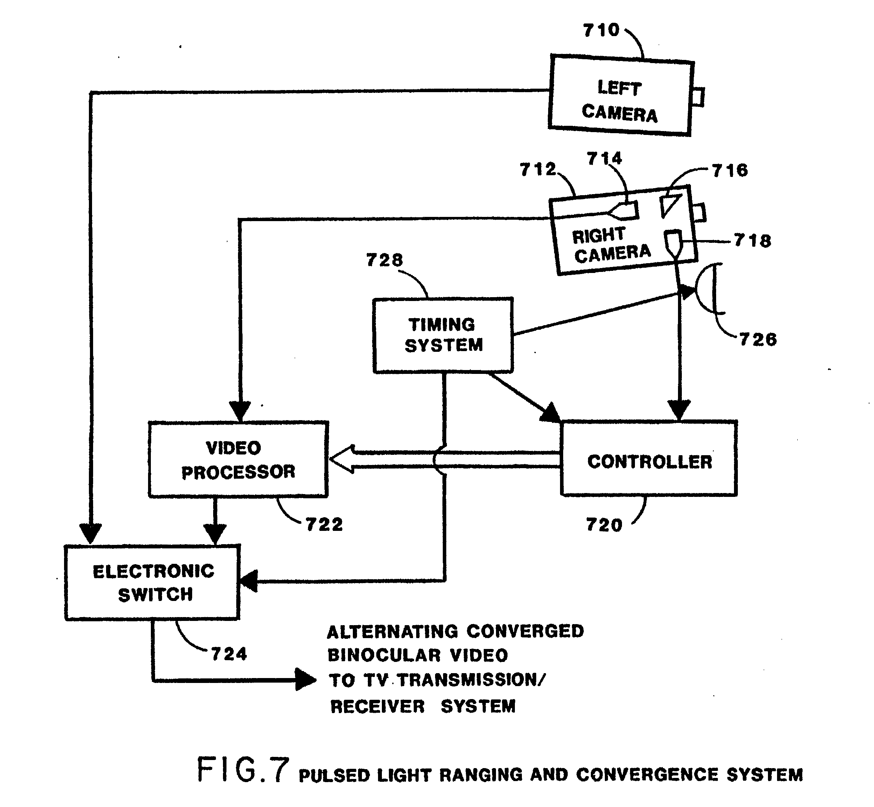

The light pulses can be implemented as a pulsed laser or can be a more conventional light strobe or can be implemented with a mechanical device such as the rotating mirrors used in very high speed photography. Since light travels at 300 meters per microsecond, the pulses must be short in duration, of the order of less than one microsecond, and the exact time of transmission must be well controlled. Sequential sample times must also be well controlled, of the order of 20 nanoseconds. The light pulses can be in the invisible portion of the spectrum (ultraviolet or infrared), and seen only by the sensor that uses it. One embodiment of such a system is shown in FIG 7. As before, two stereo optically related cameras 710 and 712 are used. However, camera 712 contains a prismatic mirror 716 for splitting incoming light between the normal camera sensor 714 and a sensor 718 which is sensitive to light from the flash source 726. The flash source 726 is strobed several times per second and emits a short burst of radiation of the order of one microsecond duration. The emitted radiation is reflected from the video scene and is focused by the camera optics and prism 716 on the radiation sensing element 718. The sensing element 718 may be several elements or may be a single element that sequentially samples the reflected radiation during sequential time intervals. During the first time interval, video elements in the 5 to 10 meter range may be identified, then video elements in the 5 to 20 meter range, etc. The controller 720 uses the information from sensor 718 to identify element edges and control the video processor 722 which time shifts appropriate video elements in the normal video from camera 712 such that when combined with the video from camera 710, by switching the two videos as previously described, the depth illusion will result without any limit of binocular fusion problem.

Range to an object can also be determined through triangulation. This can be implemented by mounting a third camera directly above one of the stereo cameras. With this camera converged with the camera below it on some object, corresponding video elements from the object will be in exact correspondence within a horizontal scan, and vertically by horizontal scan line number. Corresponding video elements from other objects at different ranges will be at the same position within the horizontal scan, but will occur on different horizontal scan lines for the upper camera than for the lower camera. Video from one of the two cameras may be passed through delay lines (such as Fairchild Semiconductor part number CCD321A1 Broadcast Quality Video Delay line) equal to integer multiples of a horizontal scan time. The signals from the two cameras are then processed by correspondence detection circuitry to determine in which horizontal lines corresponding elements occur, which will permit calculation of the distance of each element from the cameras. This information may be used to implement converged video selection techniques and can also be used in convergence video processing techniques.

CONVERGENCE DETECTION TECHNIQUES

The relative time of occurrence (within a horizontal scan) of corresponding video elements can be used to determine if the elements are within the limit of binocular fusion. The correspondence detector discussed in the previous paragraphs may be used to detect the corresponding video elements in the two stereo video signals. A device designed to detect when the corresponding video elements are within the limit of binocular fusion is the convergence detector. The convergence detector is designed to accept signals from the edge detectors and the signals from the correspondence detector. Referring to FIG 1C, it can be seen that when an object is closer to the cameras than the convergence point is to the cameras, right camera video from the object will precede the corresponding left camera video. Similarly when an object is behind the circle of convergence points (FIG 1B), left camera video from the object will precede the right camera video as the image is scanned from left to right. A convergence detector measures the time that video elements from one camera lead or lag the corresponding video elements from the other camera. If the lead or lag time is less than some (experimentally determined) threshold, then the video elements are declared to be (adequately) converged for binocular fusion, otherwise they are determined to be outside the limit of binocular fusion.

CONVERGED VIDEO SELECTION TECHNIQUES

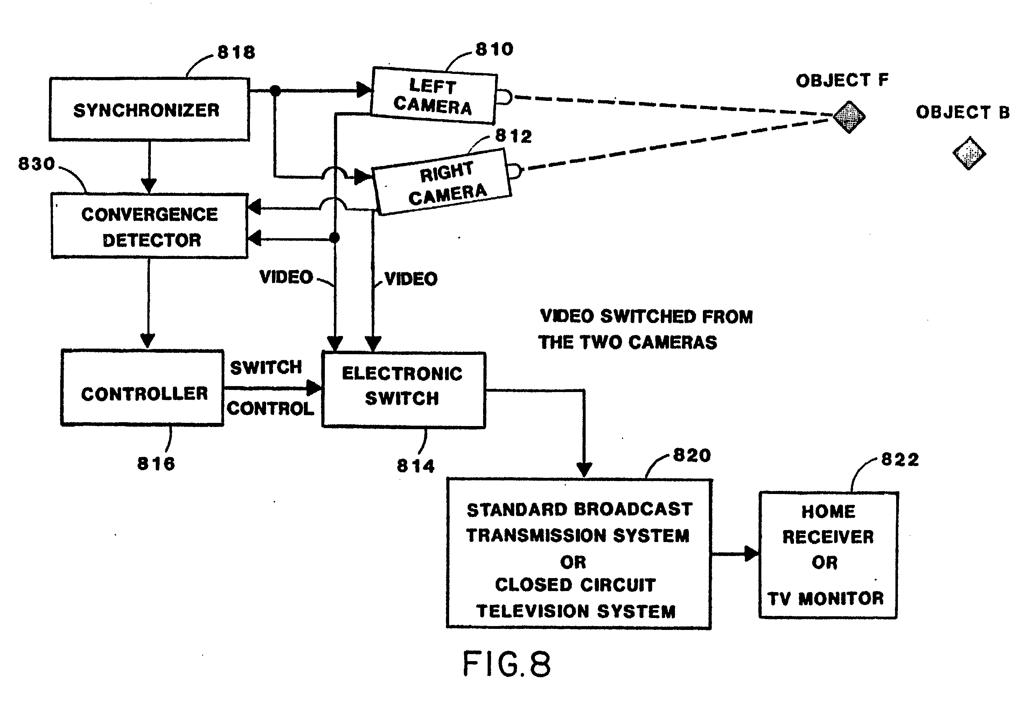

Converged video selection techniques can also be used to eliminate the limit of binocular fusion problem from three dimensional video. Such a system is presented in FIG 8, which shows two cameras 810 and 812 in accordance with the basic technique except the switch 814 is operated differently; that is, in conjunction with a convergence detector 830.

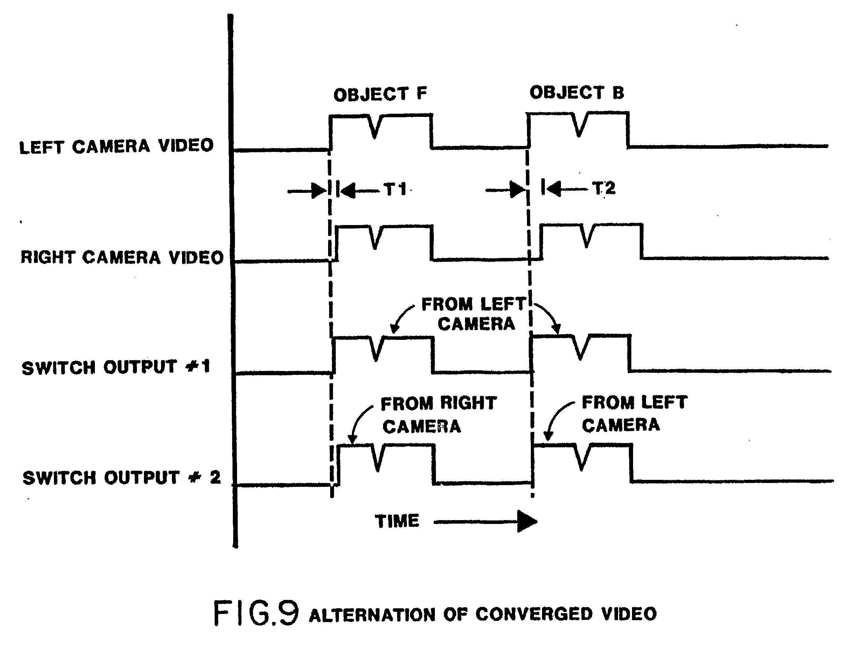

Representative signals from the two cameras 810 and 812 of FIG 8, (with the cameras converged on object F) are shown in FIG 9. Correlation, correspondence and timing circuitry in the convergence detector 830 identifies the corresponding elements in the two video signals and measures the relative time of occurrence of the corresponding picture elements, shown in FIG 9 as time T1 and time T2. In this case, time T1 is within the time threshold for binocular fusion and time T2 is greater than the threshold. Therefore, the circuitry first passes video from the left camera shown as switch output number 1 in FIG 9. A short time later the circuitry passes the video shown as switch output number 2 which is right camera video from object F (within the limit of binocular fusion) and left camera video from object B (since the right camera video would not be within the limit of binocular fusion). In this manner, the video for object F, which is within the limit of binocular fusion, is alternated at the previously established rate of 3 to 25 alternations per second, as appropriate. However, video from objects that would cause the binocular fusion problem, such as object B in the example of FIGs 8 and 9, is not alternated. In summary, only video that will be within the limit of binocular fusion will be alternated at the appropriate rate, for an appropriate portion of the horizontal scan, and for all scans in each frame. Other video is continuous from one of the cameras.

Switching circuits to combine the two video signals are already available in various devices of the television industry such as "special effects" products. Gated video amplifiers such as Motorola part number MC1445 also may be used.

One variation of converged video selection techniques is to use one "master" camera and several partner stereo cameras. For example, the first of three partner stereo cameras might be converged with the master camera on the foreground objects, the second camera is converged with the master camera on midground objects and a third camera with the master camera on background objects. Multiple sets of convergence detectors and switches would be required. The first set is connected to the master camera video and the first partner stereo camera and selects and alternates the foreground object video with the master camera video. The second set is connected to the master camera video and the second partner stereo camera and selects the alternates the midground object video. A third set would function similarly. The order of mixing or switching the videos is designed so that foreground object video replaces midground video that is overlapped (for example, background video is mixed or alternated first, then midground, then foreground). In this manner, several "layers" of video can be processed adequately for binocular fusion.

Another variation that may accomplish the same results as the above described multiple camera technique with only two cameras is as follows. The two cameras are converged on the foreground objects. The right camera is used as the master camera and foreground object video from the left camera video is alternated and combined with the right camera video as in the first converged video selection technique described above. The video from the left camera is delayed a short time (300 nanoseconds for example). This brings the left camera video from the midground or next "set" of objects into the proper time and position relationship (relative to right camera video) required for binocular fusion. A second set of convergence detection and switching circuitry is used to switch the left camera midground object video with the right camera video. This sequence of delay, convergence detection and camera video alternation may be repeated several times for sets of objects at other ranges as the application requires.

CONVERGENCE PROCESSING TECHNIQUES

The previous paragraphs described methods for selecting and alternating corresponding video elements from objects that are within the limit of binocular fusion. The following paragraphs describe video processing techniques which time shift the video elements within the two stereo video signals such that all corresponding video elements are within the limit of binocular fusion.

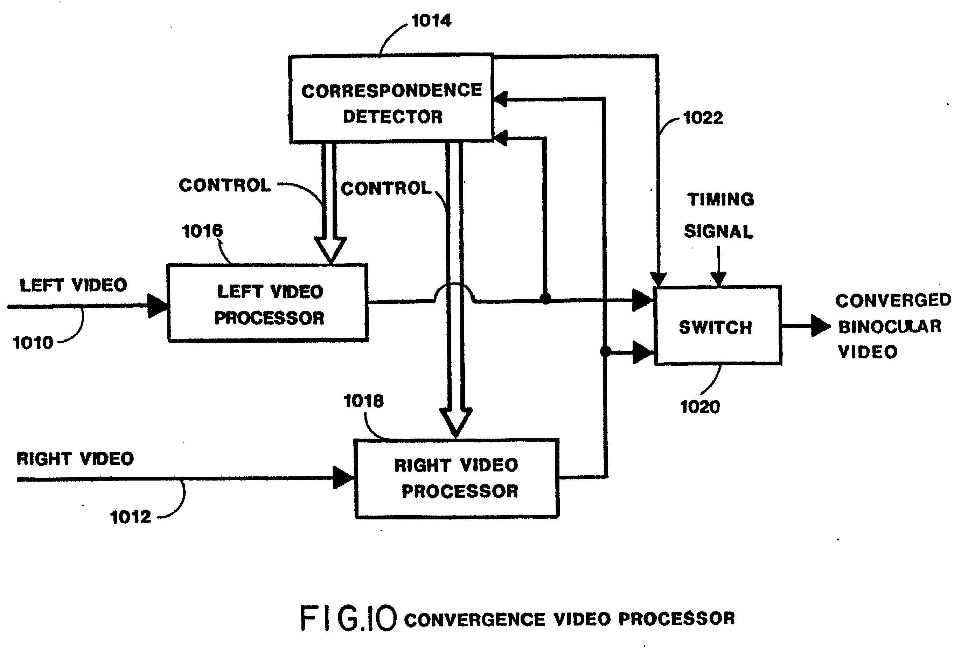

Referring to FIG 10, the left video and right video signals 1010 and 1012 are produced in accordance with the basic technique described above. The correspondence detector 1014 functions as previously described in connection with FIG 10 except that it generates control signals to control the left and right video processors 1016 and 1018. Video processors 1016 and 1018 time shift the various video elements in one or both of the stereo related video signals such that the various corresponding video elements will be in a converged binocular relationship to each other as required for binocular fusion. The two video signals may then be alternated in the previously described manner to produce the depth illusion. Time shifting can be accomplished using the analog shift register capabilities of analog devices (such as Fairchild Semiconductor part number CCD321A1 or similar devices) or the video signals can be digitized and time shifting or delays can be accomplished through the use of digital memory as intermediate storage.

An analog version of a convergence video processor may be implemented as follows. The two stereo cameras are converged on the background such that all corresponding background video elements from the two cameras are in time coincidence. Video elements in the right camera video from midground the foreground objects will precede corresponding elements in the left camera video. At the beginning of each horizontal scan, video from both cameras is passed undelayed. In this implementation, left camera video is always passed undelayed. Right camera video is also passed until the correspondence detector detects noncorrespondence between the two video signals; then the right camera video is delayed until its corresponding video element appears in the left camera video and then both signals are passed. When the right camera video is delayed, control signal 1022 controls the switch 1020 to fill in the right camera video with left camera video. The timing signal controls the switch to alternate the left camera video and processed right camera video in the previously described manner at 3 to 25 alternations per second.

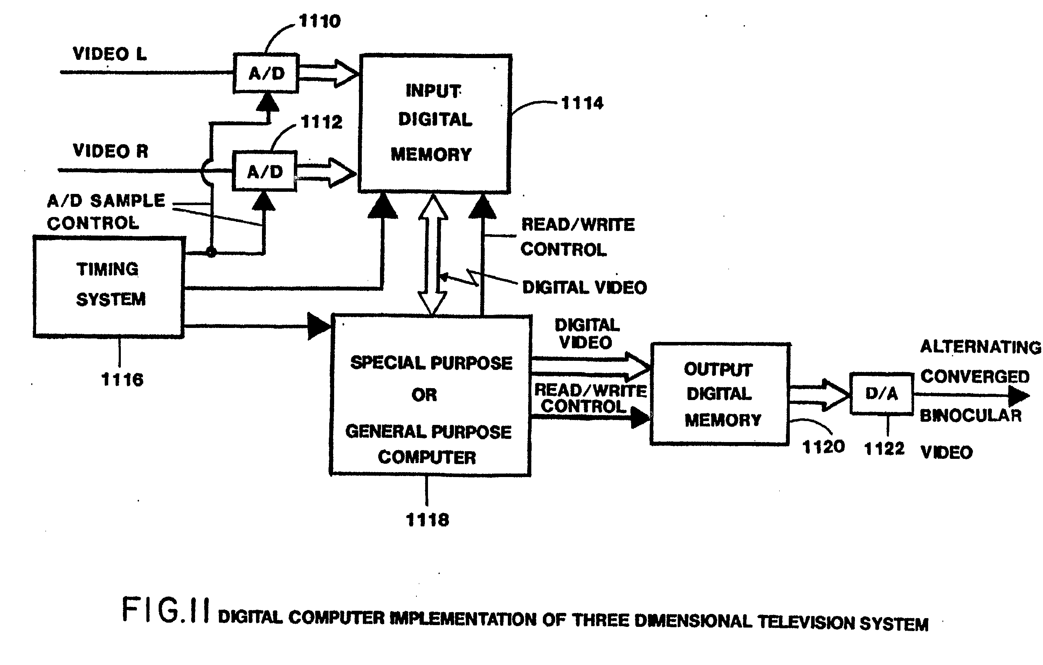

The three dimensional television system can also be implemented using a digital computer. Referring to FIG 11, video L and video R come from two stereo related cameras. The video may be monochrome, or combinations of monochrome and color signals as the application requires. The timing system 1116 sends control signals to the analog to digital converters 1110 and 1112 to cause the video to be digitized at an appropriate rate for adequate signal reproduction (of the order of a few megaherts). The digitized signals from the A/D converters 1110 and 1112 are transferred to the input digital memory 1114, also under control of the timing system 1116. The sample resolution (number of bits) of the sample process should be adequate to produce the desired effect. Computer software as designed to control the computer 1118 to examine each digitized video element individually and in sequence as required to identify elements of each object in the video scene. For example, a solid colored object would have equal video words for each adjacent video sample of that object. The equal words can be identified by the computer and the extent of the object determined in the horizontal and also the vertical position for both the left and right video cameras. When corresponding video objects from the two cameras are not in a converged video relationship, computer software is designed to horizontally shift one or both of the object's digitial representation so that the object videos are converged. Background video from the other stereo picture can be used to "fill in" at the edges where the object was shifted. The computer 1118 can then output the samples to the output digitial memory 1120 in the appropriate sequence to reproduce the two stereo related pictures at the previously described alternation rate of the basic technique. The digital video words are converted back to analog form by the D/A converter 1122. The D/A output can be filtered, synchronization signals can be reconstructed and other signals processing techniques applied as appropriate. The result will be a stereo video picture with all objects in the picture having the appropriate alternating binocular disparity but with each corresponding binocular object properly converged so that binocular fusion can take place. Thereby, the image is reproduced having the illusion of depth but without the flicker and jump caused by the limit of binocular fusion problem.

The above method may require that the stereo video be recorded so that it can be processed at a slower than real time rate. Special purpose circuitry with "hardwired" algorithms can provide for real time processing in some applications.

In convergence processing techniques, when shifting the positions of video objects, the size, shape, color and texture of the objects should be preserved. When shifting of foreground objects reveals hidden midground object edges in one of the two stereo views, that view may be filled in with its partner stereo elements. It is not essential that background elements be alternated, since no disparity is normally perceived as background.

Although the implementations herein described are for alternating stereoscopic video systems, other systems such as those using colored or polarized glasses will be substantially improved when the video is processed as described herein to provide global convergence of the stereo images.

VERTICALLY SEPARATED STEREOSCOPIC CAMERAS

Visual perception response to the images produced by horizontally separated stereoscopic cameras is well known. The illusion of depth also results when the cameras are vertically separated. A three dimensional television system in accordance with the present invention and using vertically separated (horizontal scan) cameras may be implemented in the same manner as the system previously described for the system of FIG 2 except the cameras are positioned one above the other. Camera separation distance should be nearly the same as before for the horizontally separated cameras. It may be necessary to decrease the separation distance slightly since the visual perception system may have a smaller vertical disparity fusion capability than is the horizontal disparity fusion capability. Switching of the two video signals is accomplished as before at the rate of 3 to 25 of each partner per second. The cameras may be focused and converged as before and the relative exposure times may be varied for optimal effects, applying the techniques of U.S. Patent 4,006,291. The vertical separation of cameras can also be applied to the technique of alternating interlaced fields as described in U.S. Patent 3,457,364.

When the cameras are vertically separated, corresponding video elements in the two stereo signals occur at the same point within their respective horizontal scan lines, but may occur on different scan lines.

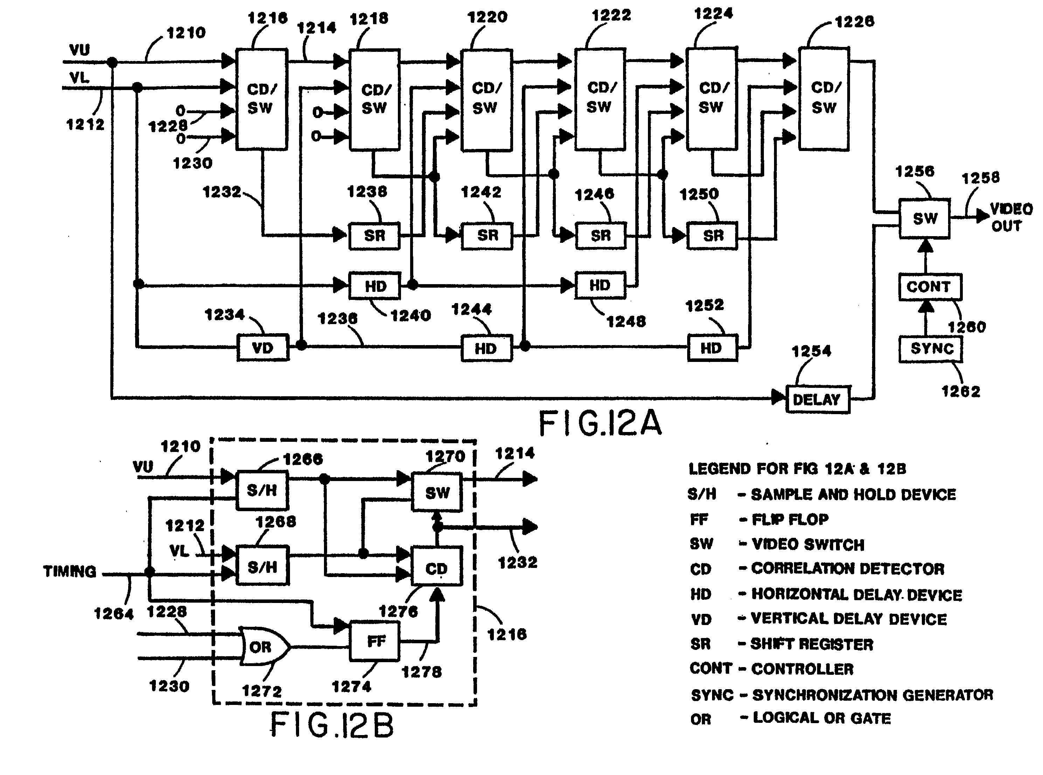

A block diagram of a video convergence processing system designed for vertically separated cameras is shown in FIG 12A. With the cameras converged on the background, video elements from the lower camera will occur on the same scan line or some scan line above the scan line of the corresponding video element of the upper camera. The design of FIG 12A assumes that the geometry of the video scene is such that each video element is within five lines of its corresponding stereo video element, but the design can be expanded as the application requires. FIG 12B contains additional details of identical blocks 1216, 1218, 1220, 1222. 1224, and 1226 of FIG 12A.

The purpose of the system of FIG 12A is to replace each video element of the upper camera signal 1210 with its corresponding video element from the lower camera signal 1212 and then alternate the resulting signal with the upper camera signal 1210 (whose elements have not been replaced by elements of the signal 1212) at the previously described rate of 3 to 25 of each image per second. Globally converged binocular video will result. To accomplish this, the video signal from the upper camera 1210 and the video signal from the lower camera 1212 are input to the correlation detection and switching block 1216, details of which are shown in FIG 12B. Logical zeros are applied to both inputs of OR gate 1272 (for blocks 1216 and 1218 only). A timing signal 1264 clocks these signals into sample and hold circuits 1266 and 1268 and flipflop 1274. If the signals out of the sample and hold circuits 1266 and 1268 are adequately correlated and the signal out of flipflop 1274 is a zero, then signal 1232 from the correlation detector 1276 causes the switch 1270 to pass the lower camera video from sample and hold circuit 1268. Otherwise, the upper camera video is passed.

The purpose of the two inputs 1228 and 1230 to OR gate 1272, in subsequent blocks 1220, 1222, 1224 and 1226, is (1) to prevent upper camera signal video elements that have already been replaced from being replaced again and (2) to prevent a lower camera signal video element from replacing more than one upper camera signal video element. Signal 1232 generates the control bit to accomplish this in subsequent stages. When the correlation detector 1276 causes the switch 1270 to pass the lower camera video element, it also emits a logical 1 on signal 1232. Note that the output from block 1218 takes two paths, to block 1220 and shift register 1242. The path to block 1220 is to accomplish function (1) above, and the path to shift register 1242 is to accomplish function (2) above. The shift register 1242 provides an appropriate delay to keep the control bit synchronized with its associated video element as it is delayed by delay element 1244.

The CD/SW block 1216 will replace all background video elements. Block 1218 will replace video elements from objects just in front of the background. Note that block 1218 is connected to replace upper camera video with lower camera video from the adjacent line of the next interlaced field; hence, vertical delay block 1234 is necessary to delay the lower camera video by approximately 1/60 second.

Block 1220 replaces video elements from the next closer objects which occur in the next horizontal scan line. Horizontal delay element 1240 delays the lower camera video for one horizontal scan interval in order to bring the lower camera video into time coincidence with upper camera video two scan lines below it.

The process is repeated until upper camera video has been processed with lower camera video of the same horizontal scan line and the five horizontal lines above it.

Delay element 1254 delays the unmodified upper camera video an appropriate amount to synchronize the two signals into the switch 1256. Synchronization generator 1262 and controller 1260 provide signals to the switch 1256 to alternate the two videos at 3 to 25 of each image per second, and globally converged alternating binocular video results.

The system of FIG 12A can be implemented in an analog form or the video signals can be digitized and the described system implemented via digital circuits. In the analog approach the delay elements can be implemented with the previously described Fairchild part number CCD321A1. The digital approach uses digital memory as the delay elements.

## VERTICALLY SCANNED HORIZONTALLY SEPARATED STEREOSCOPIC CAMERAS

The previously described vertically separated camera system is a particularly reliable and easily implementable method of producing globally converged stereoscopic video, and can be implemented with standard horizontally scanned cameras. However, the 3D effect from vertical disparity may not be as good as horizontal disparity. A similar system but using horizontal disparity can be implemented with vertically scanned cameras. The system of FIG 12A will function properly as long as the camera separation is orthogonal to the camera scan direction.

A three dimensional television system in accordance with the present invention and employing vertically scanned TV cameras may be implemented as follows. The system should be in accordance with the system previously described for the system of FIG 2 except vertically scanned TV cameras are used. With cameras scanning from bottom to top, and interlaced scan lines sequencing from left to right, the left camera video should be connected to video input 1210 in FIG 12A. Right camera video

should be connected to video input 1212. The system of FIG 12A functions as previously described.

The globally converted binocular video thus produced would produce a picture 90 degrees from upright on a standard broadcast system and a standard TV receiver. However, it can be converted to a compatible video signal with a scan conversion system consisting of an array of video storage elements such as Fairchild part number CCD321A1. Each scan line of video is temporarily stored in a storage element until a complete frame is stored. The video is scanned out, one video element from each scan line progressing left to right such that one horizontal line of video is produced, the top line first, then the second line, then the third line, thus progressing until all video is output. Alternate video lines are delayed for approximately 1/60 second to provide for the standard interlaced fields. It may be necessary to have two storage arrays so that video can be stored in one array while the previous frame is processed out of the other array.

The vertically scanned cameras can be high resolution cameras to assure that the video produced is of Broadcast quality.

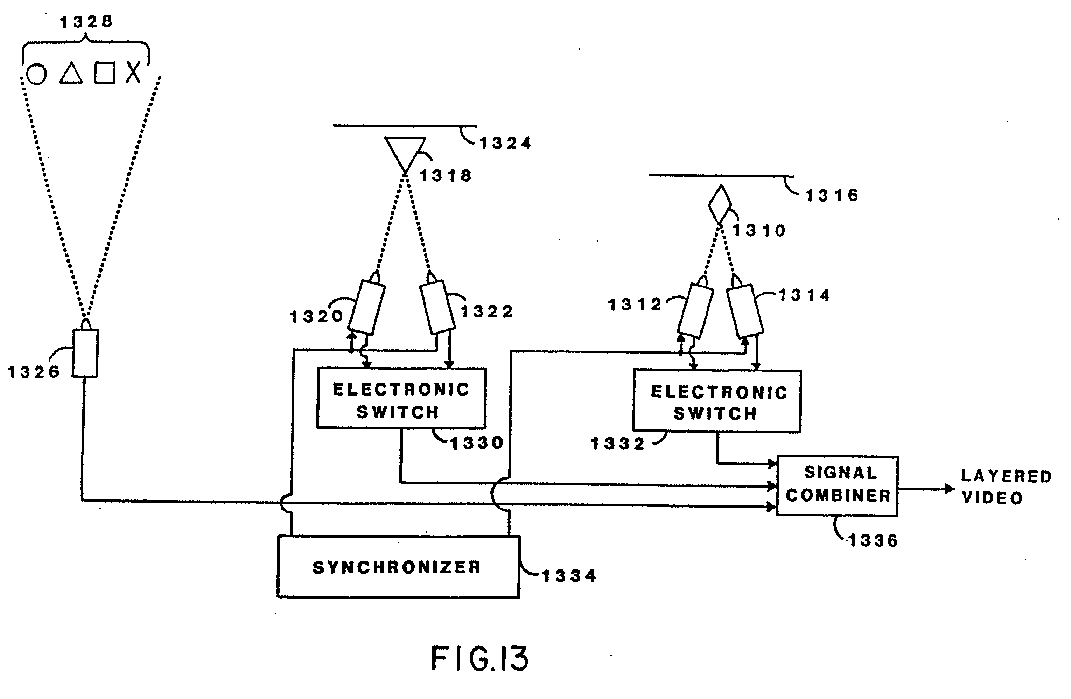

FIG 13 illustrates implementation of a layered video system designed to produce globally converged binocular video. Such a system separately produces stereo video images of only foreground object 1310 which is located approximately equal distances from a pair of foreground cameras 1312, and 1314 and in front of a solid colored background 1316. Midground object 1318 is located approximately equal distances from a second pair of cameras 1320 and 1322 and in front of a solid color background 1324. A separate monocular video camera 1326 produces a monocular video image of only background objects 1328. The video images coming from the background camera 1328, midground cameras 1318 and 1320 and foreground cameras 1310 and 1312 are combined under the control of electronic switches 1330 and 1332 and a synchronizer 1334 as described in the text associated with Fig 2 above, such that the solid color background of the midground video from midground cameras 1318 and 1320 is replaced by corresponding portions of the monocular background objects video from background camera 1328, and the solid color background of the foreground video from foreground cameras 1312 and 1314 is replaced by corresponding portions of the combined midground and background video.

## Claims

1. A method of displaying a stereo pair of images to present a single, three dimensional, sharply focused, flicker-free image to human visual perception utilizing first and second video cameras (210, 212, etc.) positioned in stereo relation to each other to view a scene and generate first and second video signals in binocular relationship with each other, characterized in comprising the steps of:

   (a) monitoring the first and second video signals,

   (b) switching between display of signals corresponding to the first and second video signals at a rate between 3 and 25 of each signal per second to create a video signal stream, and

(c) processing at least a portion of the video signal stream responsive to a characteristic of the scene.

2. A method according to claim 1 in which the monitoring step comprises processing the first and second video signals to identify the video elements within the scene which are within and not within the limit of binocular fusion.

3. A method according to claim 1 in which the switching step comprises switching between display of signals for approximately equal periods.

4. A method according to claim 1 further comprising the steps of:

(1) separately producing stereo video images of only foreground objects located approximately equal distances from the first and second cameras (1312, 1314) against a solid color background (1316),

(2) positioning third and fourth video cameras (1320, 1322) approximately equal distances from midground objects located against a solid color background (1324) and separately producing stereo video images of only those objects,

(3) separately producing monocular video of only background objects (1328),

(4) combining the foreground, midground and background video images such that the solid color background (1324) of the midground video is replaced by corresponding portions of the monocular background objects video and the solid color background (1316) of the foreground video is replaced by corresponding portions of the combined midground and background video,

(5) displaying the first combined video signal from the background video (1326) and the first and third cameras (1312, 1320), and

(6) displaying the second combined video signal from the background video and the second and fourth cameras (1314, 1322) in registration with the display of the first combined video signal, in binocular relationship to the first combined video signal and for approximately the same period as the first signal.

5. A method according to claim 1 in which the monitoring and processing steps further comprise:

(1) measuring the characteristics of the first and second video signals,

(2) comparing the characteristics and time occurrence of video elements within each of the first and second video signals,

(3) identifying corresponding video elements within each of the first and second video signals not within the limits of human binocular fusion, and

(4) processing the first video signal to time shift the video elements not within the limits of binocular fusion to bring such elements within the limits of binocular fusion when the processed video signal is displayed together with the second video signal for approximately equal periods in accordance with the switching step.

6. A method according to claim 1 in which the processing step comprises increasing the switching rate between display of the signals related to the first and second signals responsive to the light level of the scene.

7. A method according to claim 1 in which the processing step comprises increasing the switching rate between display of the signals related to the first and second signals responsive to the light level of the scene as determined by the amplitude of at least a portion of the video stream.

8. A method according to claim 1 further comprising the steps of:

(1) positioning third and fourth video cameras (1320, 1322) in stereo relation to each other to view a scene and to converge at a different distance within the scene than the first and second video cameras (1312, 1314),

(2) synthesizing and displaying a first composite video signal depicting the scene from the first and third video cameras (1312, 1320) utilizing convergence detector circuitry, switching circuitry and layered video circuitry,

(3) synthesizing a second composite video signal depicting the scene from the second and fourth video cameras (1314, 1322) utilizing convergence detector circuitry, switching circuitry and layered video circuitry, and

(4) displaying the second composite video signal in registration with the display of the first composite video signal, in binocular relationship to the first composite video signal and for approximately the same period as the first signal, and in which the switching step comprises switching the first and second composite video signals.

9. A method according to claim 1 in which the switching step comprises switching between display of one signal for a substantially shorter period than the other.

10. A method according to claim 1 further comprising the step of alternating the signals corresponding to the first and second video signals at the field alternation rate such that one signal is displayed in one interlaced field and the other signal is displayed in the other interlaced field.

11. A method according to claim 2 in which the switching step comprises switching between display of signals within the limit of binocular fusion.

12. A method according to claim 2 further comprising the step of displaying video signals from only the first video camera (210 etc.) for video elements not within the limit of binocular fusion.

13. A method according to claim 5 in which the comparing step comprises detecting the edges of video objects and comparing the characteristics of video elements within such objects.

14. A method according to claim 5 in which the identifying step comprises backlighting some objects in the video scene with light invisible to the video cameras (210, 212, etc.) and detecting object elements so backlit.

15. A method according to claim 5 in which the identifying step comprises range gating utilizing pulsed electromagnetic radiation.

16. A method according to claim 5 in which the video signal processing step comprises time delay shifting, by different delay periods, of at least two video elements within one of the video signals.

17. A method according to claim 8 further comprising the step of positioning the third and fourth video cameras (1320, 1322) one above the other.

18. A method according to any one of the preceding claims further comprising the step of positioning the first and second video cameras (1312, 1314) one above the other.

19. A television system for displaying a three dimensional, sharply focused, flicker-free image to human visual perception, comprising:

(a) a pair of video cameras (210, 212, etc.) positioned in stereo relation to each other to view a scene,

(b) means (214) for transmitting the video signal from first one of the pair of cameras and then the other camera for approximately equal periods and switching between the video signals from the first and second cameras at a rate between 3 and 25 of each image per second, and

(c) means (220, 222) receiving the transmitted video signals and displaying such signals in registration and in binocular relationship to each other, said binocular relationship displaying means characterised in comprising:

(i) means for measuring the characteristics of each of the two video signals,

(ii) means for comparing the characteristics and time occurrence of video elements within each of the two video signals,

(iii) means for identifying corresponding video elements within each of the two video signals not within the limits of human binocular fusion, and

(iv) means for processing the video signal from the one camera to time shift the video elements not within the limits of binocular fusion to bring such elements within the limits of binocular fusion when the processed video signal is displayed together with the video signal from the other camera.

## Patentansprüche

1. Verfahren zur Darstellen eines Stereo-Bildpaares, um dem menschlichen Gesichtssinn ein einzelnes dreidimensionales, scharf fokussiertes, flimmerfreies Bild darzubieten, wobei erste und zweite Video-Kameras (210, 212 usw.) benutzt werden, die gegenseitig in stereoskopischer Aufstellung positioniert sind, um eine Szene aufzunehmen und erste und zweite zueinander binokulare Videosignale zu erzeugen, dadurch gekennzeichnet, daß es die folgenden Schritte umfaßt:

(a) Überwachen der ersten und zweiten Videosignale,

(b) Umschalten zwischen der Darstellung von den ersten und zweiten Videosignalen entsprechenden Signalen mit einer Frequenz zwischen 3 und 25 jedes Signals pro Sekunde, um einen Videosignalfluß zu erzeugen,

(c) Verarbeiten mindestens eines einem Charakteristikum der Szene entsprechenden Teils des Videosignalflusses.

2. Verfahren nach Anspruch 1, dadurch gekennzeichnet, daß der Überwachungsschritt die Verarbeitung der ersten und zweiten Videosignale, um die Video(bild)elemente innerhalb der Szene zu identifizieren, die innerhalb und nicht innerhalb der Grenze der binokularen Verschmelzung sind, umfaßt.

3. Verfahren nach Anspruch 1, dadurch gekennzeichnet, daß der Umschaltschritt das Umschalten zwischen dem Darstellen von Signalen während ungefähr gleicher Perioden beinhaltet.

4. Verfahren nach Anspruch 1, dadurch gekennzeichnet, daß es ferner die folgenden Schritte umfaßt:

(1) Getrenntes Erzeugen stereoskopischer Videobilder nur der in ungefähr gleichen Abständen von den ersten und zweiten Kameras (1312, 1314) gelegenen Vordergrundobjekte vor einem einfarbigen Hintergrund (1316),

(2) Positionieren dritter und vierter Videokameras (1320, 1322) in ungefähr gleichen Abständen von vor einem einfarbigen Hintergrund (1324) angeordneten Mittelgrundobjekten und getrenntes Erzeugen stereoskopischer Videobilder nur dieser Objekte,

(3) Getrenntes Erzeugen monokularer Videobilder nur von Hintergrundobjekten (1328),

(4) Vereinigen der Vordergrund-, Mittelgrund- und Hintergrund-Videobilder, so daß der einfarbige Hintergrund (1324) des Mittelgrund-Video(bildes) durch die entsprechenden Teile des monokularen Hintergrundobjekte-Video(bildes) ersetzt ist und daß der einfarbige Hintergrund (1316) des Vordergrund-Video(bildes) durch die entsprechenden Teile des vereinigten Mittelgrund- und Hintergrund-Videobildes ersetzt ist,

(5) Darstellen des ersten vereinigten Videosignals aus dem Hintergrund-Video(bild) (1326) und von den ersten und dritten Kameras (1312, 1320) und

(6) Darstellen des zweiten vereinigten Videosignals aus dem Hintergrund-Video(bild) und von den zweiten und vierten Kameras (1314, 1322) deckungsgleich mit der Darstellung des ersten vereinigten Videosignals in binokularem Verhältnis zu dem ersten vereinigten Videosignal und für ungefähr dieselbe Periode wie das erste Signal.

5. Verfahren nach Anspruch 1, dadurch gekennzeichnet, daß die Überwachungs- und Verarbeitungsschritte ferner umfassen:

(1) Messen der Charakteristika der ersten und zweiten Videosignale,

(2) Vergleichen der Charakteristika und des zeitlichen Auftretens von Videobildelementen innerhalb jedes der ersten und zweiten Videosignale,

(3) Identifizieren entsprechender Video(bild)elemente innerhalb jedes der ersten und zweiten Videosignale, die nicht innerhalb der Grenzen der menschlichen binokularen Verschmelzung liegen, und

(4) Verarbeiten des ersten Videosignals, um die nicht innerhalb der Grenzen der binokularen Verschmelzung gelegenen Video(bild)elemente zeitlich zu verschieben, und solche Elemente (in den Bereich) innerhalb der Grenzen der binokularen Verschmelzung zu bringen, wenn das verarbeitete Videosignal zusammen mit dem zweiten Signal für ungefähr gleiche Perioden gemäß dem Umschaltschritt dargestellt wird.

6. Verfahren nach Anspruch 1, dadurch gekennzeichnet, daß der Verarbeitungsschritt ein Erhöhen der Umschaltrate zwischen der Darstellung der auf die ersten und zweiten Signale bezogenen Signale entsprechend dem Helligkeitspegel der Szene beinhaltet.

7. Verfahren nach Anspruch 1, dadurch gekennzeichnet, daß der Verarbeitungsschritt ein Erhöhen der Umschaltrate zwischen der Darstellung der auf die ersten und zweiten Signale bezogenen Signale entsprechend dem Helligkeitspegel der Szene, wie er durch die Amplitude mindestens eines Teils des Video(signal)flusses bestimmt ist, beinhaltet.

8. Verfahren nach Anspruch 1, dadurch gekennzeichnet, daß es ferner die folgenden Schritte umfaßt:

(1) Positionieren dritter und vierter Videokameras (1320, 1322) in gegenseitigem stereoskopischem Verhältnis, um eine Szene aufzunehmen und sie in einer von derjenigen der ersten und zweiten Videokameras (1312, 1314) verschiedenen Entfernung innerhalb der Szene zu konvergieren,

(2) Synthetisieren und Darstellen eines ersten zusammengesetzten Videosignals, das die Szene von den ersten und dritten Videokameras (1312, 1320) bildlich darstellt unter Benutzung einer Konvergenzdetektorschaltung, einer Umschalt-Schaltung und einer Schichtbildschaltung,

(3) Synthetisieren eines zweiten zusammengesetzten Videosignals, das die Szene von den zweiten und vierten Videokameras (1314, 1322) bildlich darstellt unter Benutzung der Konvergenzdetektorschaltung, der Umschalt-Schaltung und der Schichtbildschaltung, und

(4) Darstellen des zweiten zusammengesetzten Videosignals deckungsgleich mit dem Darstellen des ersten zusammengesetzten Videosignals in binokularem Verhältnis zu dem ersten zusammengesetzten Videosignal und für ungefähr dieselbe Periode wie das erste Signal, und wobei der Umschaltschritt das Umschalten der ersten und zweiten Videosignale umfaßt.

9. Verfahren nach Anspruch 1, dadurch gekennzeichnet, daß der Umschaltschritt das Umschalten zwischen dem Darstellen eines Signals für eine wesentlich kürzere Periode als diejenige des anderen beinhaltet.

10. Verfahren nach Anspruch 1, dadurch gekennzeichnet, daß es ferner den folgenden Schritt umfaßt:

Wechseln der Signale entsprechend den ersten und zweiten Videosignalen mit der Halbbildwechselfrequenz, so daß ein Signal in einem Zeilensprung-Halbbild dargestellt ist und das andere Signal in dem anderen Zeilensprung-Halbbild dargestellt ist.

11. Verfahren nach Anspruch 2, dadurch gekennzeichnet, daß der Umschaltschritt das Umschalten zwischen dem Darstellen von Signalen innerhalb der Grenze der binokularen Verschmelzung beinhaltet.

12. Verfahren nach Anspruch 2, dadurch gekennzeichnet, daß es ferner den folgenden Schritt umfaßt:

Darstellen von Videosignalen von nur der ersten Videokamera (210 usw.) für Video(bild)elemente, die nicht innerhalb der Grenze der binokularen Verschmelzung liegen.

13. Verfahren nach Anspruch 5, dadurch gekennzeichnet, daß der Vergleichsschritt das Detektieren der Kanten von Video(bild)objekten und das Vergleichen der Charakteristika von Video(bild)elementen innerhalb solcher Objekte beinhaltet.

14. Verfahren nach Anspruch 5, dadurch gekennzeichnet, daß der Identifizierungsschritt das Beleuchten einiger Objekte in der Videoszene in für die Videokamera (210, 212 usw.) unsichtbarem Gegenlicht und Detektieren der so im Gegenlicht beleuchteten Objektelemente beinhaltet.

15. Verfahren nach Anspruch 5, dadurch gekennzeichnet, daß der Identifizierungsschritt eine Bereichsausblendung unter Benutzung gepulster elektromagnetischer Strahlung beinhaltet.

16. Verfahren nach Anspruch 5, dadurch gekennzeichnet, daß der Videosignal-Verarbeitungsschritt eine Zeitverzögerungsverschiebung um verschiedene Verzögerungsperioden mindestens zwei Video(bild)elemente innerhalb eines der Videosignale beinhaltet.

17. Verfahren nach Anspruch 8, dadurch gekennzeichnet, daß es ferner den Schritt umfaßt: Positionieren der dritten und vierten Videokameras (1320, 1322) übereinander.

18. Verfahren nach einem der vorstehenden Ansprüche, dadurch gekennzeichnet, daß es ferner den Schritt umfaßt: Positionieren der ersten und zweiten Videokameras (1312, 1314) übereinander.

19. Fernsehsystem zur Darstellung eines dreidimensionalen, scharf fokussierten, flimmerfreien Bildes gegenüber dem menschlichen Gesichtssinn, umfassend:

(a) ein Paar von in stereoskopischem Verhältnis zueinander positionierten Videokameras (210, 212 usw.), um eine Szene aufzunehmen,

(b) eine Einrichtung (214) zum Aussenden des Videosignals von der ersten Kamera des Paares von Kameras und dann von der anderen Kamera für ungefähr gleiche Perioden, und zum Umschalten zwischen den Videosignalen mit einer Frequenz zwischen 3 und 25 für jedes Bild pro Sekunde und

(c) Einrichtungen (220, 222), die die gesendeten Videosignale empfangen und diese Signale deckungsgleich und in binokularem Verhältnis zueinander darstellen, wobei die im binokularen Verhältnis darstellende Einrichtung gekennzeichnet ist durch

(I) eine Einrichtung zum Messen der Charakteristika jedes der beiden Videosignale,

(II) eine Einrichtung zum Vergleichen der Charakteristika und des zeitlichen Auftretens von Video(bild)elementen innerhalb jedes der beiden Videosignale,

(III) eine Einrichtung zum Identifizieren entsprechender Video(bild)elemente innerhalb jedes der beiden Videosignale, die nicht innerhalb der Grenzen der menschlichen binokularen Verschmelzung liegen, und

(IV) eine Einrichtung zum Verarbeiten des Videosignals von der einen Kamera, um die nicht innerhalb der Grenzen der binokularen Verschmelzung gelegenen Videobildelemente zeitlich zu verschieben und (damit) solche Elemente (in den Bereich) innerhalb der Grenzen der binokularen Verschmelzung zu bringen, wenn das verarbeitete Videosignal zusammen mit dem Videosignal von der anderen Kamera dargestellt wird.

## Revendications

1. Procédé d'affichage d'une paire d'images stéréoscopiques pour obtenir une seule image à trois dimensions, à focalisation marquée et sans paillottement relativement à la vision humaine, utilisant une première et deuxième caméras vidéo (210, 212, etc...) placées en position stéréoscopique l'une par rapport à l'autre pour prendre une scène et engendrer un premier et un second signal vidéo en relation binoculaire l'un avec l'autre, caractérisé en ce qu'il comprend les étapes suivantes:

(a) contrôler le premier et le second signal vidéo,

(b) commuter l'affichage des signaux correspondant aux premier et second signaux vidéo à un rythme compris entre 3 et 25 par seconde pour chaque signal pour créer un courant de signal vidéo, et

(c) traiter au moins une partie du courant de signal vidéo en réponse à une caractéristique de la scène.

2. Un procédé selon la revendication 1 dans lequel l'étape de contrôle comprend le traitement des premier et second signaux vidéo pour identifier les éléments vidéo de la scène qui sont à l'intérieur et non à l'intérieur de la limite de fusion binoculaire.

3. Un procédé selon la revendication 1 dans lequel l'étape de commutation comprend la commutation de l'affichage des signaux pendant des durées approximativement égales.

4. Un procédé selon la revendication 1 comprenant en outre les étapes suivantes:

(1) produire séparément des images vidéo stéréoscopiques uniquement d'objets du premier plan situés approximativement à égales distances de la première et de la deuxième caméras (1312, 1324) devant un arrière-plan solide coloré (1316),

(2) placer des troisième et quatrième caméras vidéo (1320, 1322) approximativement à égales distances d'objets dans un plan intermédiaire situés sur un arrière-plan solide coloré (1324) et produire séparément des images vidéo stéréoscopiques uniquement de ces objets,

(3) produire séparément une vidéo monoculaire des objets d'arrière-plan uniquement (1328),

(4) combiner les images vidéo du premier plan, du plan intermédiaire et de l'arrière-plan de sorte que l'arrière-plan solide coloré de la vidéo du plan intermédiaire soit remplacée par les parties correspondantes de la vidéo monoculaire des objets d'arrière-plan et que l'arrière-plan solide coloré (1316) de la vidéo du premier plan soit remplacée par les parties correspondantes de la vidéo combinée plan intermédiaire et arrière-plan.

(5) afficher le premier signal vidéo combiné à partir de la vidéo d'arrière-plan (1326) et des premières et troisième caméras (1312, 1320), et

(6) afficher le second signal vidéo combiné à partir de la vidéo d'arrière-plan et des deuxième et quatrième caméras (1314, 1322) parallèlement à l'enregistrement de l'affichage du premier signal vidéo combiné, en relation binoculaire par rapport au premier signal vidéo combiné et pendant approximativement la même durée que pour le premier signal.

5. Un procédé selon la revendication 1 dans lequel les étapes de contrôle et de traitement comprennent de plus les étapes suivantes:

(1) mesurer les caractéristiques des premier et second signaux vidéo,

(2) comparer les caractéristiques et les instants d'apparition des éléments vidéo dans chacun des premier et second signaux vidéo,

(3) identifier les éléments vidéo correspondants dans chacun des premier et second signaux vidéo non situés dans les limites de fusion binoculaire humaine, et

(4) traiter le premier signal vidéo pour décaler dans le temps les éléments vidéo non situés dans les limites de fusion binoculaire pour amener ces éléments dans les limites de fusion binoculaire lorsque le signal vidéo traité est affiché ainsi que le second signal vidéo pendant approximativement des durées égales conformément à l'étape de commutation.

6. Un procédé selon la revendication 1 dans lequel l'étape de traitement comprend l'augmentation de la fréquence de commutation entre l'affichage des signaux relatifs aux premier et second signaux en réponse au niveau de lumière de la scène.

7. Un procédé selon la revendication 1 dans lequel l'étape de traitement comprend l'augmentation de la fréquence de commutation entre l'affichage des signaux relatifs aux premier et second signaux en réponse au niveau de lumière de la scène déterminé par l'amplitude d'au moins une partie du courant vidéo.

8. Un procédé selon la revendication 1 comprenant en outre les étapes suivantes:

(1) placer des troisième et quatrième caméras vidéo (1320, 1322) en position stéréoscopique l'une par rapport à l'autre pour prendre une scène et pour converger à l'intérieur de la scène à une distance différente de celle des première et seconde caméras vidéo (1312, 1314),

(2) synthétiser et afficher un premier signal vidéo composite représentant la scène à partir des première et troisième caméras vidéo (1312, 1320) en utilisant des circuits détecteurs de convergence, des circuits de commutation et des circuits vidéo en couches,

(3) synthétiser un second signal vidéo composite représentant la scène à partir des deuxième et quatrième caméras vidéo (1314, 1322) en utilisant des circuits détecteurs de convergence, des circuits de commutation et des circuits vidéo en couches, et

(4) afficher le second signal vidéo composite en enregistrement avec l'affichage du premier signal vidéo composite, en relation binoculaire par rapport au premier signal vidéo composite et pendant approximativement la même durée que pour le premier signal, et dans lequel l'étape de commutation comprend la commutation des premier et second signaux vidéo composites.

9. Un procédé selon la revendication 1 dans lequel l'étape de commutation comprend la commutation entre l'affichage d'un signal pendant une durée sensiblement plus courte que l'autre.

10. Un procédé selon la revendication 1 comprenant en outre l'étape d'alternance des signaux correspondant aux premier et second signaux vidéo à la fréquence d'alternance de trame de sorte qu'un signal est affiché dans une trame entrelacée et l'autre signal est affiché dans l'autre trame entrelacée.

11. Un procédé selon la revendication 2 dans lequel l'étape de commutation comprend la commutation entre l'affichage des signaux dans la limite de fusion binoculaire.

12. Un procédé selon la revendication 2 comprenant en outre l'étape d'affichage des signaux vidéo à partir de la première caméra vidéo uniquement (210, etc...) pour les éléments vidéo non situés dans la limite de fusion binoculaire.

13. Un procédé selon la revendication 5 dans lequel l'étape de comparaison comprend la détection des bords des objets vidéo et la comparaison des caractéristiques des éléments vidéo à l'intérieur de ces objets.

14. Un procédé selon la revendication 5 dans lequel l'étape d'identification comprend l'éclairage de fond de certains objets dans la scène vidéo avec une lumière invisible des caméras vidéo (210, 212, etc.) et la détection des éléments d'objets ainsi éclairés.

15. Un procédé selon la revendication 5 dans lequel l'étape d'identification comprend l'utilisation d'impulsions de localisation par rayonnement électromagnétique.

16. Un procédé selon la revendication 5 dans lequel l'étape de traitement des signaux vidéo comprend le décalage du temps de retard, par différentes durées de retard, d'au moins deux éléments vidéo dans l'un des signaux vidéo.

17. Un procédé selon la revendication 8 comprenant en outre l'étape de positionnement des troisième et quatrième caméras vidéo (1320, 1322) l'une au-dessus de l'autre.

18. Un procédé selon l'une quelconque des revendications précédentes comprenant en outre l'étape de positionnement des première et seconde caméras vidéo (1312, 1314) l'une au-dessus de l'autre.

19. Un système de télévision pour afficher à trois dimensions, à focalisation marquée et sans papillottement relativement à la vision humaine, comprenant:

(a) une paire de caméras vidéo (210, 212, etc...) positionnées en position stéréoscopique l'une par rapport à l'autre pour prendre une scène,

(b) des moyens (214) pour transmettre le signal vidéo d'abord d'une des caméras de la paire de caméras et ensuite de l'autre caméra pendant approximativement des durées égales et pour commuter les signaux vidéo des première et deuxième caméras à un rythme compris entre 3 et 25 par seconde pour chaque image, et

(c) des moyens (220, 222) pour recevoir les signaux vidéo émis et pour afficher ces signaux en enregistrement et en relation binoculaire l'un par rapport à l'autre, lesdits moyens d'affichage en relation binoculaire étant caractérisés en ce qu'ils comprennent:

(i) des moyens pour mesurer les caractéristiques de chacun des deux signaux vidéo,

(ii) des moyens pour comparer les caractéristiques et l'instant d'apparition des éléments vidéo dans chacun des signaux vidéo,

(iii) des moyens pour identifier les éléments vidéo correspondants dans chacun des deux signaux vidéo non situés dans les limites de la fusion binoculaire humaine, et

(iv) des moyens pour traiter le signal vidéo à partir d'une caméra pour décaler dans le temps les éléments vidéo non situés dans les limites de la fusion binoculaire pour amener ces éléments dans les limites de la fusion binoculaire lorsque le signal vidéo traité est affiché avec le signal vidéo de l'autre caméra.

OBJECT F

LEFT EYE

RIGHT EYE

OBSERVER

OBJECT B

FIG.1A

LEGEND:

——————

LEFT EYE VIEW

— — — — — —

RIGHT EYE VIEW

OBJECT F    OBJECT B

OBJECT F    OBJECT B

OBJECT F    OBJECT B

FIG. 1B — SUPERIMPOSED

RETINAL IMAGES WITH EYES

CONVERGED ON OBJECT F

FIG. 1C — SUPERIMPOSED

RETINAL IMAGES WITH EYES

CONVERGED ON OBJECT B

FIG. 1D — IMAGES

RECONSTRUCTED

FOR CONVERGENCE

OF BOTH OBJECTS

FIG.1

FIG.2

EP 0 230 704 B1

FIG.3 AMPLITUDE CORRELATION MEASUREMENT

EP 0 230 704 B1

FIG.4 SLOPE CORRELATION MEASUREMENT

EP 0 230 704 B1

VIDEO IN

200ns DELAY

510

DIFFERENTIAL AMPLIFIER

512

THRESHHOLD ADJUST

514

FLIP FLOP OR DIGITAL COUNTER

516

FIG.5 VIDEO EDGE DETECTOR/COUNTER

FIG.6. CORRESPONDENCE DETECTOR

FIG.7 PULSED LIGHT RANGING AND CONVERGENCE SYSTEM

EP 0 230 704 B1

FIG.8

EP 0 230 704 B1

FIG.9 ALTERNATION OF CONVERGED VIDEO

FIG.10 CONVERGENCE VIDEO PROCESSOR

FIG.11 DIGITAL COMPUTER IMPLEMENTATION OF THREE DIMENSIONAL TELEVISION SYSTEM

EP 0 230 704 B1

FIG.12A

FIG.12B

LEGEND FOR FIG. 12A & 12B

S/H - SAMPLE AND HOLD DEVICE
FF - FLIP FLOP
SW - VIDEO SWITCH
CD - CORRELATION DETECTOR
HD - HORIZONTAL DELAY DEVICE
VD - VERTICAL DELAY DEVICE
SR - SHIFT REGISTER
CONT - CONTROLLER
SYNC - SYNCHRONIZATION GENERATOR
OR - LOGICAL OR GATE

FIG.13

EP 0 230 704 B1